# DEMANDE DE BREVET EUROPEEN

(11) **EP 1 151 687 A1**
(43) Date de publication de la demande: **07.11.2001**
(21) Numéro de dépôt: 01401154.8
(22) Date de dépôt: 04.05.2001
(51) Int. Cl.: A44B 11/12, B60P 7/08

(54) **Dispositif pour tendre un organe longiliqne tel qu'une sangle**

(30) Priorité: 04.05.2000 FR 0005716
(71) Demandeur: Renault, 92109 Boulogne Billancourt (FR)
(72) Inventeur: Michelin, Didier, 78950 Gambais (FR)

(57) **Abrégé**

Ce dispositif pour tendre un organe longiligne tel qu'une sangle (6) est du type pouvant être actionné au moyen d'un levier de serrage (3)

Ce dispositif est remarquable en ce qu'il comprend en outre un levier limiteur d'effort (13) articulé sur ledit levier de serrage (3) et des moyens d'accouplement (27, 29, 39, 47) desdits leviers (3, 13) l'un à l'autre se débrayant automatiquement lorsque ledit levier limiteur d'effort (13) est soumis à un effort de serrage dont l'intensité dépasse une valeur prédéterminée.

Application de ce dispositif au serrage des sangles permettant d'immobiliser des charges dans le volume de transport d'un véhicule utilitaire.

## Description

La présente invention se rapporte à un dispositif pour tendre un organe longiligne tel qu'une sangle.

On connaît de la technique antérieure différents dispositifs permettant de tendre un organe longiligne tel qu'une sangle pouvant par exemple être destinée à immobiliser des charges dans le volume de transport d'un véhicule utilitaire.

Parmi ces dispositifs, il y a notamment ceux du type pouvant être actionnés au moyen d'un levier de serrage.

Typiquement, un tel dispositif peut comprendre un cylindre coopérant avec un ou plusieurs cliquets antiretour autour duquel s'enroule une extrémité de l'organe longiligne, l'actionnement du levier ayant pour effet de faire tourner le cylindre et ainsi de tendre cet organe longiligne.

Un tel dispositif peut engendrer une tension considérable dans l'organe longiligne.

En particulier, lorsque cet organe est une sangle du type susmentionné, cette tension peut entraîner la détérioration de pièces du véhicule automobile qui coopèrent avec cette sangle, tels que des anneaux, des rails ou d'autres parties de la caisse de ce véhicule.

La présente invention a pour but de fournir un dispositif du type à levier de serrage qui permette de prévenir la détérioration susmentionnée.

On atteint ce but de l'invention avec un dispositif pour tendre un organe longiligne tel qu'une sangle du type pouvant être actionné au moyen d'un levier de serrage, remarquable en ce qu'il comprend en outre un levier limiteur d'effort articulé sur ledit levier de serrage et des moyens d'accouplement desdits leviers l'un à l'autre se débrayant automatiquement lorsque ledit levier limiteur d'effort est soumis à un effort de serrage dont l'intensité dépasse une valeur prédéterminée.

Grâce à ces caractéristiques, le levier limiteur d'effort peut se désaccoupler automatiquement du levier de serrage lorsque la tension dans l'organe longiligne atteint une valeur limite au-delà de laquelle il est établi que certaines pièces de liaison (anneaux, rails, parties de la caisse d'un. véhicule automobile...) risquent d'être endommagés.

Le levier limiteur d'effort devient alors en quelque sorte « fou », et il empêche toute transmission supplémentaire d'effort au levier de serrage.

Suivant d'autres caractéristiques du dispositif selon l'invention :
- lesdits moyens d'accouplement comprennent au moins un profil d'indexation formé sur l'un desdits leviers, au moins un organe d'indexation monté coulissant sur l'autre desdits leviers et coopérant avec ledit profil d'indexation, et des moyens élastiques pour maintenir ledit organe d'indexation au contact dudit profil d'indexation, .
- ledit profil d'indexation est conformé de manière que l'intensité de l'effort à fournir pour accoupler lesdits leviers lorsque lesdits moyens d'accouplement sont en position débrayée soit inférieure à ladite valeur prédéterminée,
- ledit un desdits leviers comprend une âme et deux joues latérales, et ledit dispositif comprend deux profils d'indexation définis par des bords desdites joues latérales,
- ledit autre desdits leviers comprend une âme et deux joues latérales définissant une cavité, et lesdits moyens d'accouplement s'étendent au moins en partie dans ladite cavité,
- lesdits moyens élastiques comprennent au moins un ressort,
- lesdits un et autre desdits leviers sont respectivement ledit levier de serrage et ledit levier limiteur d'effort,
- ledit levier limiteur d'effort est monté à l'extérieur dudit levier de serrage,
- ce dispositif est du type à cliquet.

D'autres caractéristiques et avantages de la présente invention apparaîtront à la lecture de la description qui va suivre et à l'examen du dessin annexé, dans lequel :
- la figure 1 représente une vue de côté du dispositif selon l'invention,
- la figure 2 représente une vue de dessus du dispositif selon l'invention, et
- la figure 3 est une vue en perspective du levier limiteur d'effort du dispositif selon l'invention.

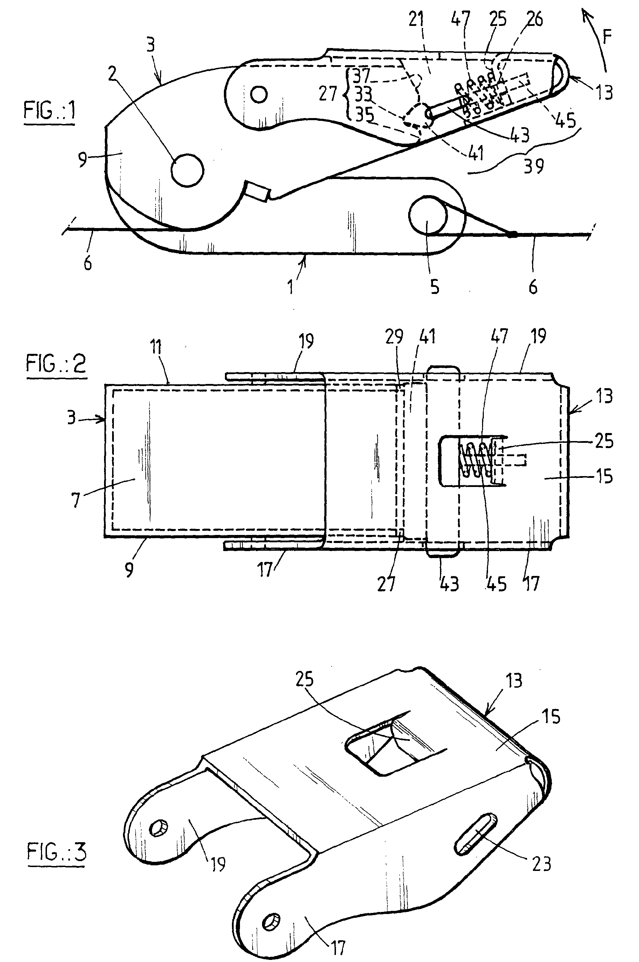

On se reporte à présent à la figure 1, sur laquelle on voit que le dispositif selon l'invention comprend une embase 1 sur laquelle est articulé un levier de serrage 3.

L'embase 1 est destinée à être reliée de manière fixe par l'intermédiaire d'une broche 5 à une extrémité d'organe longiligne que l'on souhaite tendre tel qu'une sangle 6.

Cette embase peut supporter par ailleurs un mécanisme classique du type à cylindre et à cliquet antiretour (non représenté) centré sur un axe de rotation 2 et recevant l'autre extrémité de l'organe longiligne 6.

Classiquement, le levier de serrage 3 peut coopérer avec ce mécanisme de manière qu'un effort de serrage tendant à faire tourner ce levier par rapport à l'embase 1 dans le sens de la flèche F ait pour effet de tendre l'organe longiligne 6.

Le levier de serrage 3 peut comprendre une âme 7 et deux joues latérales 9, 11 définissant sensiblement une forme en U (voir figure 2).

Selon une caractéristique essentielle, le dispositif selon l'invention comprend également un levier limiteur d'effort 13 articulé sur le levier de serrage 3 (voir figures 1 et 2).

Ce levier limiteur d'effort 13 peut lui aussi comprendre une âme 15 et deux joues latérales 17, 19 définissant une cavité 21 (voir figures 1 à 3).

Ces joues sont de préférence munies chacune de fentes, une seule d'entre elles étant visible sur la figure 3 et portant la référence 23.

Une partie 25 de l'âme 15 est repoussée vers l'intérieur de la cavité 21 de manière à former un organe de butée muni d'un orifice 26 (voir figure 1).

De préférence, et comme cela est visible notamment sur la figure 2, le levier limiteur d'effort 13 est monté à l'extérieur du levier de serrage 3.

Selon d'autres caractéristiques essentielles, chacun des bords 27, 29 des joues latérales 9, 11 (voir figure 2) définit un profil d'indexation comprenant une partie en creux 33 située entre une partie formant butée 35 et une partie formant échappement 37.

Le dispositif selon l'invention comprend également un organe d'indexation 39 placé dans la cavité 21 entre les bords 27, 29 et l'organe de butée 25 (voir figure 1).

Cet organe d'indexation 39 comprend un élément d'extrémité en forme de coin 41 solidaire d'un élément intermédiaire de guidage en forme de plaque 43 monté coulissant à l'intérieur des fentes 23 formées dans les joues latérales 17, 19, ainsi qu'une tige 45 reliée à l'élément 43 et susceptible de coulisser à l'intérieur de l'orifice 26 formé dans l'organe de butée 25.

Un ressort 47 est placé autour de la tige 45, entre l'élément 43 et l'organe de butée 25 de manière à rappeler élastiquement l'élément 41 contre les bords 27, 29.

Le mode de fonctionnement et les avantages de la présente invention découlent directement de la description qui précède.

Lorsqu'on souhaite tendre l'organe longiligne 6, on place le levier limiteur d'effort 13 par rapport au levier de serrage 3 dans la configuration de la figure 1, c'est-à-dire de manière que l'élément 41 de l'organe d'indexation 39 coopère avec les parties en creux 33 des bords 27, 29, bloquant ainsi la rotation du levier 13 par rapport au levier 3.

Lorsqu'on imprime au levier limiteur d'effort 13 un effort de serrage tendant à faire tourner ce levier par rapport à l'embase 1 dans le sens de la flèche F, la poussée exercée par le ressort 47 permet de maintenir les leviers 3 et 13 accouplés l'un à l'autre tant que l'intensité dudit effort reste inférieure à une valeur prédéterminée.

Cette valeur prédéterminée dépend principalement de la géométrie des bords 27, 29 et de la raideur du ressort 47.

En choisissant correctement ces derniers paramètres, on peut adapter cette valeur prédéterminée à chaque utilisation que l'on souhaite faire du dispositif selon l'invention.

Tant que les leviers 3 et 13 demeurent accouplés l'un à l'autre, l'effort de serrage imprimé au levier limiteur d'effort 13 est intégralement transmis au levier de serrage 3, ce qui permet de tendre l'organe longiligne 6.

Lorsque cette tension atteint une valeur telle qu'il est nécessaire d'imprimer au levier 13 un effort de serrage dont l'intensité dépasse la valeur prédéterminée susmentionnée, l'organe d'indexation 39 se déplace vers la droite de la figure à l'encontre de la poussée exercée par le ressort 47, et l'élément 41 quitte Les parties en creux 33 pour glisser le long des parties d'échappement 37.

On obtient ainsi en quelque sorte un débrayage automatique des moyens permettant de maintenir les leviers 3 et 13 accouplés l'un à l'autre.

Le levier limiteur d'effort 13 devient ainsi « fou », ce qui empêche toute transmission d'effort supplémentaire au levier de serrage 3, et par conséquent toute augmentation de la tension de l'organe longiligne 6.

Lorsqu'on souhaite rendre le dispositif selon l'invention à nouveau opérationnel, par exemple après que la tension de l'organe longiligne 6 est redescendue en dessous de sa valeur maximale autorisée, il suffit de faire tourner le levier limiteur d'effort 13 par rapport au levier de serrage 3 dans le sens contraire à celui de la flèche F.

Ce faisant, l'élément 41 glisse sur les parties d'échappement 37 des bords 27, 29, puis il vient à nouveau se loger dans les parties en creux 33 de ces bords.

Les parties formant échappement 37 sont conformées en pente douce de manière que l'intensité de l'effort à fournir pour ré-accoupler les leviers 3 et 13 soit inférieure à la valeur prédéterminée susmentionnée.

Les parties formant butées 35 des bords 27, 29 permettent d'éviter que l'élément 41 ne sorte des parties en creux 33 en direction du bas de la figure.

Comme on peut le comprendre à présent, le dispositif selon l'invention joue en quelque sorte un rôle de disjoncteur qui « saute » dès que la tension dans l'organe longiligne 6 atteint une valeur limite au-delà de laquelle il est établi que certaines pièces de liaison (anneaux, rails, parties de la caisse d'un véhicule automobile...) risquent d'être endommagés.

Ce dispositif permet ainsi d'éviter la détérioration de ces pièces, et ce au moindre coût : en effet, comme cela est apparu à la lecture de ce qui précède, le levier limiteur d'effort 13 et l'organe d'indexation 39 peuvent facilement être adaptés sur un dispositif de serrage disponible dans le commerce.

Bien entendu, la présente invention n'est pas limitée au mode de réalisation décrit et représenté, fourni à titre d'exemple illustratif et non limitatif.

C'est ainsi par exemple que l'organe d'indexation pourrait s'étendre à l'intérieur du levier de serrage, et coopérer avec des bords du levier limiteur d'effort, auquel cas les fentes permettant de guider cet organe d'indexation pourraient être formées dans les joues du levier de serrage.

Un tel dispositif impliquerait toutefois que l'on apporte des modifications importantes aux dispositifs disponibles dans le commerce.

C'est ainsi également que l'on pourrait envisager un dispositif dans lequel le levier limiteur d'effort serait monté à l'intérieur du levier de serrage.

## Revendications

1. Dispositif pour tendre un organe longiligne tel qu'une sangle (6) du type pouvant être actionné au moyen d'un levier de serrage (3), comprenant en outre un levier limiteur d'effort (13) articulé sur ledit levier de serrage (3) et des moyens d'accouplement (27, 29, 39, 47) desdits leviers (3, 13) l'un à l'autre se débrayant automatiquement lorsque ledit levier limiteur d'effort (13) est soumis à un effort de serrage dont l'intensité dépasse une valeur prédéterminée, **caractérisé en ce que** lesdits moyens d'accouplement (27, 29, 39, 47) comprennent au moins un profil d'indexation (27, 29) formé sur l'un (3) desdits leviers (3, 13), au moins un organe d'indexation (39) monté coulissant sur l'autre (13) desdits leviers (3, 13) et coopérant avec ledit profil d'indexation (27, 29), et des moyens élastiques (47) pour maintenir ledit organe d'indexation (39) au contact dudit profil d'indexation (27, 29).

2. Dispositif selon la revendication 1, **caractérisé en ce que** ledit profil d'indexation (27, 29) est conformé de manière que l'intensité de l'effort à fournir pour accoupler lesdits leviers (3, 13) lorsque lesdits moyens d'accouplement (27, 29, 39, 47) sont en position débrayée soit inférieure à ladite valeur prédéterminée.

3. Dispositif selon l'une des revendications 1 ou 2, **caractérisé en ce que** ledit un (3) desdits leviers (3, 13) comprend une âme (7) et deux joues latérales (9, 11), et **en ce que** ledit dispositif comprend deux profils d'indexation définis par des bords (27, 29) desdites joues latérales (9, 11).

4. Dispositif selon l'une quelconque des revendications 1 à 3, **caractérisé en ce que** ledit autre (13) desdits leviers (3, 13) comprend une âme (15) et deux joues latérales (17, 19) définissant une cavité (21), et **en ce que** lesdits moyens d'accouplement (27, 29, 39, 47) s'étendent au moins en partie dans ladite cavité (21).

5. Dispositif selon l'une quelconque des revendications précédentes, **caractérisé en ce que** lesdits moyens élastiques (47) comprennent au moins un ressort.

6. Dispositif selon l'une quelconque des revendications précédentes, **caractérisé en ce que** lesdits un (3) et autre (13) desdits leviers (3, 13) sont respectivement ledit levier de serrage (3) et ledit levier limiteur d'effort (13).

7. Dispositif selon l'une quelconque des revendications précédentes, **caractérisé en ce que** ledit levier limiteur d'effort (13) est monté à l'extérieur dudit levier de serrage (3).

8. Dispositif selon l'une quelconque des revendications précédentes, **caractérisé en ce qu'**il est du type à cliquet.
